# EUROPÄISCHE PATENTSCHRIFT

(11) **EP 0 550 513 B1**
(45) Veröffentlichungstag und Bekanntmachung des Hinweises auf die Patenterteilung: **22.06.1994**
(21) Anmeldenummer: 91916569.6
(22) Anmeldetag: 26.09.1991
(51) Int. Cl.: G06K 9/00, G06K 9/64

(54) **VERFAHREN UND SCHALTUNGSANORDNUNG ZUR AUTOMATISCHEN ZEICHENERKENNUNG AUF DOKUMENTEN**
PROCESS AND CIRCUIT FOR AUTOMATIC CHARACTER RECOGNITION ON DOCUMENTS
PROCEDE ET CIRCUIT POUR LA RECONNAISSANCE AUTOMATIQUE DES CARACTERES SUR LES DOCUMENTS

(30) Priorität: 27.09.1990 EP 90118614
(43) Veröffentlichungstag der Anmeldung: 14.07.1993
(73) Patentinhaber: CGK Computer Gesellschaft Konstanz mbH, D-78467 Konstanz (DE)
(72) Erfinder: MITTELBACH, Helmut, D-7750 Konstanz (DE); KOCHERT, Wilfried, D-7750 Konstanz (DE)
(74) Vertreter: Fuchs, Franz-Josef, Dr.-Ing.
(86) Internationale Anmeldenummer: EP9101833
(87) Internationale Veröffentlichungsnummer: WO9206446

(56) Entgegenhaltungen:
- US-A- 4 195 344
- PATENT ABSTRACTS OF JAPAN, Vol. 7, No. 101 (P-194)(1246) 28 April 1983; & JP-A-58024975

## Beschreibung

Die Erfindung betrifft ein Verfahren und eine Schaltungsanordnung zur automatischen Zeichenerkennung auf Dokumenten.

Bei der zahlreichen Verwendung von Dokumenten zu organisatorischen Zwecken in immer mehr Lebensbereichen kommt der automatischen Erkennung von Schriftzeichen, die gegenüber der manuellen Aufbereitung der Dokumente in datenverarbeitungsgerechte Form erheblich Vorteile bezüglich Zeit- und Kostenaufwand bietet, eine zunehmend höhere Bedeutung zu. Die zu lesende Nutzinformation auf einem Dokument besteht aus hand- oder maschinenschriftlich eingetragenen Schriftzeichen, deren Erkennung in mehreren Teilvorgängen durchgeführt wird. Beispiele für grundlegende Teilprozesse des gesamten Erkennungsvorgangs sind das Auffinden eines Zeichens, seine Aufbereitung und Analyse, sowie die Zuordnung zu einer Zeichenklasse (Klassifikation).

Die von einem Schriftlesesystem für die Bearbeitung eines Dokuments benötigte Zeit ist wegen der stark unterschiedlich gestalteten Vorlagen und der komplexen Erkennungsvorgänge, die nicht auf Normschrift und genau definierte Lesezonen auf den Dokumenten beschränkt sind, im Einzelfall nicht vorhersagbar und kann in großen Bereichen variieren. Durch Kopplung des Schriftlesesystems mit Eingabeeinheiten hoher Durchsatzleistung, beispielsweise Hochgeschwindigkeits-Belegsortierern, können Engpässe bei der Bearbeitung der eintreffenden Dokumente entstehen, die eine Zurückweisung des Dokuments bereits vor Beginn des Erkennungsvorgangs zur Folge haben können.

Daher liegt der vorliegenden Erfindung die Aufgabe zugrunde, ein Verfahren und eine Schaltungsanordnung zur automatischen Zeichenerkennung auf Dokumenten zu schaffen, mit denen eine Abwicklung der Erkennungsaufgaben auch unter strengen Realzeitbedingungen gewährleistet ist.

Diese Aufgabe wird durch die Merkmale der Patentansprüche 1 und 2 bezüglich des Verfahrens und der Schaltungsanordnung gelöst.

Demnach findet eine Zuteilung des Erkennungsvorgangs für ein vorliegendes Dokument an eine von mehreren Erkennungseinheiten statt, so daß in mehreren Erkennungseinheiten gleichzeitig Erkennungsaufträge bearbeitet werden können.

Die Zuweisung von Bearbeitungsaufträgen an die einzelnen Erkennungseinheiten wird von einer Steuereinheit veranlaßt, die auch die zeitlichen Abläufe der Erkennungsvorgänge in den Erkennungseinheiten überwacht. Dabei wird von ihr ein Zeitgeber zur Angabe der Bearbeitungsdauer des Erkennungsvorgangs ausgelöst, der mit einem Erwartungswert für die Bearbeitungsdauer des aktuell laufenden Teilprozesses in einer Erkennungseinheit verglichen wird. Der Teilprozeß ergibt sich aus dem durch Statusinformationen festgelegten und jederzeit abrufbaren Bearbeitungszustand der Erkennungseinheit.

Befindet sich die Erkennungseinheit in einem Zustand, der auf Grund des Zeitvergleichs keinen erfolgversprechenden Ablauf des gesamten Erkennungsvorgangs erwarten läßt, wird dieser Vorgang von der Steuereinheit vorzeitig beendet, falls bei Überbeschäftigung, d.h. alle verfügbaren Erkennungseinheiten sind mit Erkennungsaufgaben beschäftigt, ein Dokument zur Bearbeitung ansteht. Somit ist gewährleistet, daß der Bearbeitungsauftrag ohne Zeitverzögerung einer Erkennungseinheit zugewiesen wird, deren Erkennungsvorgang zuvor abgebrochen worden ist.

Einzelheiten der Erfindung werden anhand eines in der Zeichnung dargestellten Ausführungsbeispiels näher erläutert.

Im einzelnen zeigen
FIG 1 ein Übersichtsschaubild der Schaltungsanordnung zur automatischen Zeichenerkennung,
FIG 2 ein Übersichtsschaubild der in der Schaltungsanordnung gemäß FIG 1 enthaltenen Einheiten und
FIG 3 ein Ablaufdiagramm für das erfindungsgemäße Verfahren zur automatischen Zeichenerkennung.

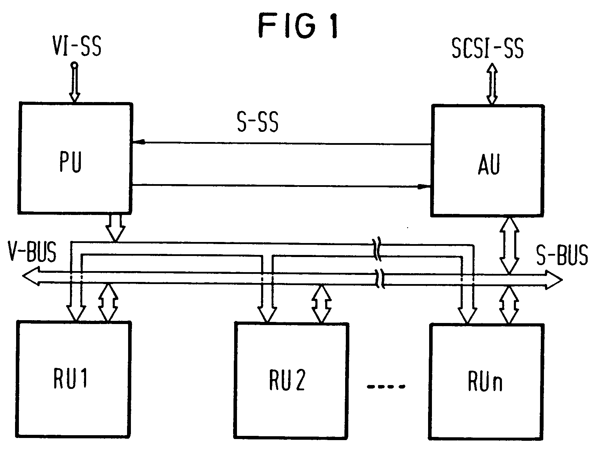

Das Übersichtsschaubild gemäß FIG 1 zeigt die Schaltungsanordnung zur automatischen Erkennung von hand- oder maschinenschriftlichen Zeichen auf Dokumenten, beispielsweise Scheckformularen, in ihrem allgemeinen Aufbau. Gekoppelt ist das Zeichenerkennungssystem mit einem Belegsortierer hoher Verarbeitungsgeschwindigkeit über eine Schnittstelle VI-SS, die die zu einem Dokument jeweils gehörigen digitalen Bilddaten von einer hochauflösenden CCD-Kamera (Charge Coupled Devices) empfängt und an eine Bildeinheit PU für die Aufbereitung der Daten zur anschließenden Übertragung an eine der Erkennungseinheiten RU1...RUn übergibt. Die Auswahl der Erkennungseinheit, in der der Erkennungsvorgang anhand der gelieferten Dokumentdaten ausgeführt werden soll, erfolgt durch eine Steuereinheit AU, die den Datenverkehr zwischen den einzelnen Einheiten AU, PU, RU1...RUn regelt.

Dabei werden Anweisungen und Kommandos zwischen der Bildeinheit PU und der Steuereinheit AU über die serielle Schnittstelle S-SS abgewickelt, während die gegenseitige Kommunikation zwischen der Steuereinheit AU und den Erkennungseinheiten RU1... RUn durch Anschluß der Einheiten an ein bidirektional ausgeführtes Leitungssystem S-BUS möglich ist. Von der Steuereinheit AU werden Bearbeitungsaufträge an die parallel angeordneten, gleichartig aufgebauten Erkennungseinheiten RU1...RUn verteilt, der zeitliche Ablauf der Erkennungsvorgänge überwacht, sowie das Leseergebnis oder eine Zurückweisungsmeldung nach einem durchgeführten Erkennungsvorgang an der parallelen Schnittstelle SCSI-SS zur weiteren Auswertung bereitstellt.

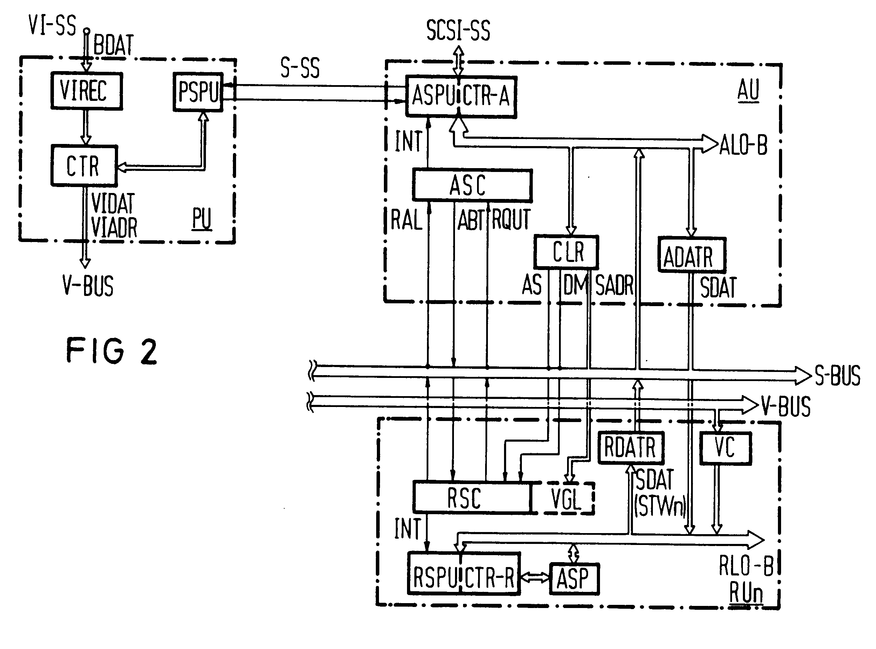

In FIG 2 ist ein Blockschaltbild der Einheiten PU, AU und RUn dargestellt, wobei der Aufbau der Erkennungseinheit RUn stellvertretend für den aller Erkennungseinheiten RU1...RUn gemäß FIG 1 steht. Bevor mit der Übertragung der in der Bildeinheit PU aufbereiteten Daten eines Dokuments an eine ausgewählte Erkennungseinheit begonnen werden kann, sendet die Steuereinheit AU durch ihren zugehörigen Signalprozessor ASPU über die serielle Schnittstelle S-SS mehrere Kommandos, bestehend jeweils aus einem Kommandowort definierter Bitlänge, an den Signalprozessor PSPU der Bildeinheit PU.

Die Kommandos beziehen sich dabei auf die Initialisierung der Bildeinheit PU, beispielsweise Abfragen ihres Zustands, Löschen aller Registerinhalte, Einstellen der Startadresse für das Auslesen des Arbeitsspeichers, in dem die aus den Bilddaten BDAT gewonnenen Pixeldaten VIDAT abgelegt sind, Festlegung der Betriebsart, usw. Durch ein Sendekommando der Steuereinheit AU wird der Bildeinheit PU mitgeteilt, welche der Erkennungseinheiten momentan keinen Bearbeitungsauftrag aufweisen und somit für die Zuteilung einer Erkennungsaufgabe geeignet sind.

Der aktuelle Bearbeitungszustand der Erkennungseinheit RUn wird bereitgestellt, indem das zugehörige Statuswort STWn vom Signalprozessor RSPU der Erkennungseinheit RUn geliefert und über das lokale Leitungssystem RLO-B in ein Datenregister RDATR eingetragen wird. Zur Abfrage der Statusinformationen STWn wird vom Signalprozessor ASPU über das lokale Leitungssystem ALO-B eine Anrufadresse SADR in ein Register CLR geladen, begleitet von den beiden Steuersignalen AS und DM. Der Zustand des Steuersignals AS gibt dabei den Empfang (AS=0) oder das Senden (AS=1) der Daten SDAT durch die Steuereinheit AU an, während der Zustand des Steuersignals DM eine Statusabfrage bzw. eine Anweisung an die Erkennungseinheit mittels eines Datenwortes (DM=0) oder aber die Übertragung mehrerer Datenwörter (DM=1) zwischen der Steuereinheit AU und der Erkennungseinheit RUn kennzeichnet.

Jede Erkennungseinheit empfängt über das Leitungssystem S-BUS die Anrufadresse SADR, die einer Vergleichsschaltung VGL zur Feststellung der Identität von Adresse und eigener Identifikationsnummer zugeführt wird. In einer Kontrolleinrichtung RSC der angerufenen Erkennungseinheit RUn werden die am Leitungssystem S-BUS anliegenden Steuersignale AS und DM ausgewertet, die Ausgänge des Datenregisters RDATR auf das Leitungssystem S-BUS geschaltet, und das anliegende Datenwort STWn mit den Statusinformationen über das lokale Leitungssystem ALO-B vom Signalprozessor ASPU in der Steuereinheit AU übernommen und in einer Speichereinrichtung zur späteren Weiterverarbeitung zwischengespeichert.

Aus dem empfangenen Statuswort STWn sind Statussignale ableitbar, aus denen der aktuelle Bearbeitungszustand der Erkennungseinheit RUn hervorgeht. Ein Erkennungsvorgang umfaßt mehrere Teilprozesse, von denen der aktuell bearbeitete Teilprozeß durch Auswertung der ihnen zugeordneten Statusinformationen festgestellt wird. Dem Statuswort STWn kann darüber hinaus ein Wartezustand für die Zuteilung eines Bearbeitungsauftrages durch die Steuereinheit AU entnommen werden.

Hat die Steuereinheit AU nach Auswertung des übertragenen Statuswortes STWn die Erkennungseinheit RUn als beschäftigungslos erkannt, so sendet sie durch ihren zugehörigen Signalprozessor ASPU ein Kommando an den Signalprozessor PSPU der Bildeinheit PU, in dem die Identifikationsnummer der freien Erkennungseinheit PUn gemeldet wird. Nach Empfang der Bilddaten BDAT eines vorliegenden Dokuments über die Schnittstelle VI-SS, Zwischenspeicherung in einer Puffereinrichtung VIREC und Aufbereitung in der Einheit CTR werden dann die Daten VIDAT über das Leitungssystem V-BUS an die durch die Zieladresse VIADR ausgewählte freie Erkennungseinheit RUn übertragen. Dabei erfolgt die Übergabe der Dokumentdaten in Datenblöcken durch sukzessives Abfragen eines Datenbereitsignals auf dem Leitungssystem V-BUS, dessen Zustand jeweils angibt, ob noch ein weiterer Datenblock zur Übertragung an die Erkennungseinheit RUn vorliegt.

Durch Setzen des Datenbereitsignals für die ausgewählte Erkennungseinheit wird dieser Erkennungseinheit ein Auftrag für eine Erkennungsaufgabe mitgeteilt. Alle ausgesandten Daten- und Steuersignale V-BUS werden von einer Kontrolleinrichtung VC übernommen und über das lokale Leitungssystem RLO-B an die Verarbeitungseinrichtung CTR-R mit angeschlossenem Arbeitsspeicher ASP zur selbständigen Ausführung des Erkennungsvorgangs weitergeleitet. Ein gegebenenfalls noch laufender alter Erkennungsvorgang wird abgebrochen.

Der zur Bildeinheit PU gehörige Signalprozessor PSPU meldet dem korrespondierenden Signalprozessor ASPU der Steuereinheit AU das Ende der durchgeführten Datenübertragung unter Angabe der Identifikationsnummer der empfangenden Erkennungseinheit RUn, sofern von der Bildeinheit PU kein Fehler angezeigt wird, hervorgerufen beispielsweise durch Überlauf der Puffereinrichtung VIREC oder dadurch, daß die zum anliegenden Dokument gehörigen Daten von der angerufenen Erkennungseinheit RUn nicht abgeholt worden sind, was jeweils eine Zurückweisungsmeldung durch die Steuereinheit AU über die Schnittstelle SCSI-SS an eine angeschlossene Ausgabeeinheit zur Folge hat.

Mit der Ankunft der Daten bei der angerufenen Erkennungseinheit RUn wird vom Signalprozessor ASPU ein Zeitgeber gestartet, der die Bearbeitungsdauer des in der Erkennungseinheit RUn laufenden Erkennungsvorgangs angibt. Für jeden Teilprozeß wird ein Erwartungswert festgelegt, der einen erfolgversprechenden Ablauf des gesamten Erkennungsvorgangs in der für die Bearbeitung einer Vorlage maximal zur Verfügung stehenden Zeit erwarten läßt.

Bei Überschreitung einer der Erwartungswerte für die Bearbeitungsdauer der aktuell in der Erkennungseinheit RUn laufenden Teilprozesse mit dem jeweiligen Zeitgeberwert kann von der Steuereinheit AU bei Bedarf ein Abbruch des momentanen Erkennungsvorgangs ausgelöst werden. Wird beispielsweise beim Teilprozeß für das Auffinden eines Zeichens der vorgegebene Erwartungswert für die Bearbeitungsdauer überschritten, so ist die Wahrscheinlichkeit für einen erfolgreichen Abschluß des gesamten Erkennungsvorgangs in der zur Verfügung stehenden Zeit gering.

Ein Abbruch eines Erkennungsvorgangs in der beschriebenen Weise erfolgt dann, wenn im Falle der Beschäftigung aller Erkennungseinheiten mit Erkennungsvorgängen ein neuer Bearbeitungsauftrag vorliegt. Um keine Warteschlange bei der Bearbeitung anstehender Dokumente entstehen zu lassen, muß folglich ein Erkennungsvorgang in einer beschäftigten Erkennungseinheit vorzeitig beendet werden. Die Statusabfrage der einzelnen Erkennungseinheiten ermoglicht der Steuereinheit AU, nur die Erkennungsvorgänge auszuwählen, die geringe Erfolgsaussichten haben.

Kommandos zwischen der Steuereinheit AU und den Erkennungseinheiten dienen dazu, die Ergebnisse der Erkennungseinheiten der Steuereinheit AU mitzuteilen. Die hierfür notwendige Betriebsanweisung wird vom Signalprozessor ASPU der Steuereinheit AU erzeugt, die Anrufadresse SADR, die Steuersignale AS und DM mit den entsprechenden Zuständen (AS=1,DM=0), sowie das die Anweisung enthaltende Datenwort SDAT in gleicher Weise wie bei der Statusabfrage an das Leitungssystem S-BUS angelegt.

Zusätzlich werden von den Kontrolleinrichtungen ASC bzw. RSC die Signale ABT bzw. RQUT generiert, die zur Abwicklung des Datentransfers dienen. Für die Bereitstellung des Datenwortes SDAT wird das Signal ABT gesetzt (ABT=1) und übertragen, und nach Empfang der Quittungsmeldung (RQUT=0) wieder zurückgesetzt (ABT=0). In der Kontrolleinrichtung RSC der angerufenen Erkennungseinheit RUn wird auf Grund des eingetroffenen Datenbereitsignals ABT ein Unterbrechungssignal INT an den Signalprozessor RSPU ausgelöst, das eine Übernahme der am Leitungssystem S-BUS anliegenden Daten bewirkt, wobei durch das Signal RQUT die Ankunft der Daten (RQUT=0) angezeigt wird. Nach Empfang des zurückgesetzten Datenbereitsignals ABT (ABT=0) wird die Quittungsmeldung ebenfalls wieder zurückgenommen (RQUT=1). Hat die ausgewählte Erkennungseinheit RUn ihrem derzeit laufenden Erkennungsvorgang abgebrochen, erzeugt die Steuereinheit AU für das Dokument, das zu keinem Leseergebnis führt, eine Zurückweisungsmeldung.

Für den Fall, daß die Erkennungseinheit RUn einen Datentransfer wünscht, beispielsweise Meldung des Leseergebnisses nach erfolgreich durchgeführtem Erkennungsvorgang oder Übermittlung von Fehlermeldungen, wird von ihr ein Signal RAL ausgesendet, das im Signalprozessor ASPU der Steuereinheit AU eine Unterbrechungsmeldung INT und damit eine Abfrage des geänderten Statuswortes STWn bewirkt. Das Abholen der Ergebnisdaten wird von der Steuereinheit AU durch Aussenden einer Anweisung vorbereitet. Danach werden mehrere Datenwörter SDAT, die das Erkennungsergebnis der adressierten Erkennungseinheit enthalten, aus dem Arbeitsspeicher ASP der Erkennungseinheit RUn gelesen und in eine in der Kontrolleinrichtung CTR-A der Steuereinheit AU vorgesehene Speichereinrichtung eingeschrieben.

Die Datenübertragung in der umgekehrten Richtung, d.h. von der Steuereinheit AU zur Erkennungseinheit RUn, läuft unter Benutzung des Datenregisters ADATR in der Steuereinheit AU in gleicher Weise ab, jedoch ist eine vorbereitende Anweisung an die Erkennungseinheit RUn nicht erforderlich.

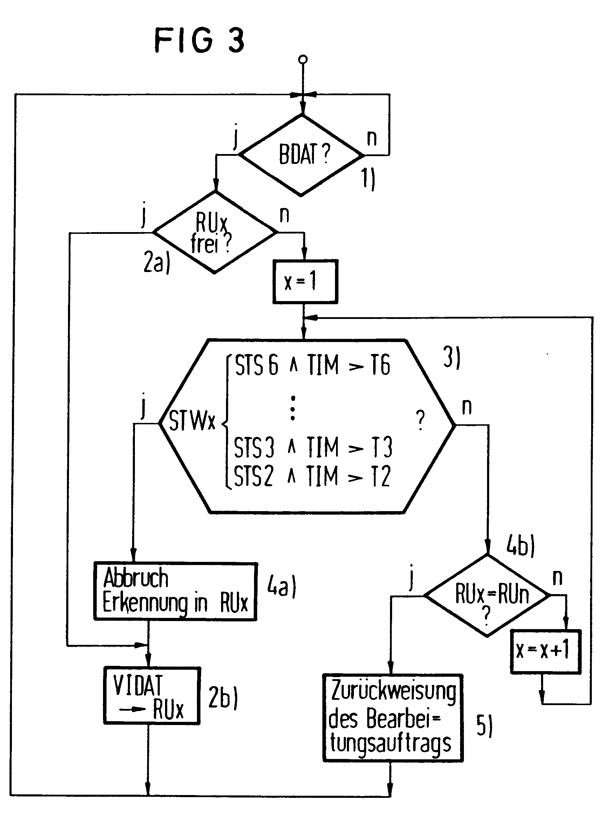

FIG 3 zeigt ein Flußdiagramm zur automatischen Zeichenerkennung gemäß der Erfindung mit folgenden Verfahrensschritten:

1) Grundlage für die Durchführung eines Erkennungsvorgangs sind die Bilddaten BDAT eines vorliegenden Dokuments, die nach Aufbereitung in einer Bildeinheit an eine von mehreren Erkennungseinheiten zur selbständigen Bearbeitung in einer maximal zur Verfügung stehenden Zeit übertragen werden sollen.

2a) Die Abfrage der einzelnen Erkennungseinheiten, ob sie sich im Bearbeitungszustand befinden oder nicht, wird von einer Steuereinheit durchgeführt, indem das zu einer Erkennungseinheit jeweils gehörige Statuswort überprüft wird, ohne daß dadurch ein eventuell laufender Erkennungsvorgang unterbrochen werden muß. Ergibt die Auswertung des Statuswortes, daß eine Erkennungseinheit RUx beschäftigungslos ist, d.h. derzeit keinen Erkennungsvorgang durchzuführen hat, so erhält die Erkennungseinheit RUx die aufbereiteten Pixeldaten VIDAT gemäß dem Verfahrensschritt 2b).

2b) Die Erkennungseinheit RUx holt sich die Daten VIDAT blockweise durch Abfrage eines Datenbereitsignals von der Bildeinheit.

3) Sind allen Erkennungseinheiten Bearbeitungsaufträge zur Durchführung von Erkennungsvorgängen zugeteilt und steht ein weiteres Dokument zur Analyse bereit, muß wegen der Einhaltung der Bedingungen für ein Realzeitverfahren ein Erkennungsvorgang vorzeitig abgebrochen werden. Das Kriterium für oder gegen einen Abbruch liegt in der Wahrscheinlichkeit, mit der ein erfolgreicher Abschluß des gesamten Erkennungsvorgangs in einer Erkennungseinheit erwartet wird.

Von der Steuereinheit wird eine Statusabfrage der Erkennungseinheit RUx durchgeführt, bei der ein zugehöriges Statuswort STWx gelesen und daraus der derzeitige Bearbeitungszustand ermittelt wird. Jeder der den gesamten Erkennungsvorgang bestimmenden Teilprozesse, beispielsweise das Auffinden des interessierenden Betragsfeldes auf einem Dokument, die Segmentierung der zum Betrag gehörigen Teile in dem aufgefundenen Feld, die Analyse der Betragsteile, usw., ist im Statuswort STWx durch eine Statusinformation STS2, STS3, STS4, usw. festgelegt, anhand der erkennbar ist, welcher Teil der Erkennungsaufgabe aktuell von der Erkennungseinheit RUx bearbeitet wird.

Für jeden Teilprozeß werden Maximalzeiten für die Bearbeitungsdauer der einzelnen Teilprozesse bestimmt, die einen erfolgversprechenden Ablauf des gesamten Erkennungsvorgangs erwarten lassen. Der vorgegebene Erwartungswert, für den in der Erkennungseinheit RUx aktuell laufenden Teilprozeß, beispielsweise der Erwartungswert T2 für das Auffinden des Betragsfeldes auf dem Dokument, wird mit dem Wert eines der Erkennungseinheit RUx zugeordneten und von der Steuereinheit ausgelösten Zeitgebers TIM, der die Bearbeitungsdauer des laufenden Erkennungsvorgang angibt, verglichen. Bei Überschreitung des Erwartungswertes T2 ist die Wahrscheinlichkeit für das Erzielen eines Leseergebnisses in der für den gesamten Erkennungsprozeß maximal zur Verfügung stehenden Zeit gering, so daß dieser Erkennungsvorgang abgebrochen werden kann. In gleicher Weise wird bei einem anderen aktuell ablaufenden Teilprozeß mit den entsprechend zugeordneten Erwartungswerten T3...T6 verfahren.

4a) Abbruch des momentan laufenden Erkennungsvorgangs der Erkennungseinheit RUx, der von der Steuereinheit durch Aussenden eines entsprechenden Kommandos bewirkt wird, und Übernahme der anliegenden Dokumentdaten VIDAT aus der Bildeinheit gemäß dem Verfahrensschritt 2b).

4b) Wird von der Steuereinheit anhand der Zeitbedingungen ein Abbruch des Erkennungsvorgangs nicht veranlaßt, so wird der Bearbeitungszustand der nächsten Erkennungseinheit (x=x+1) gemäß dem Verfahrensschritt 3) überprüft.

5) Für den Fall, daß für keine Erkennungseinheit ein vorzeitiger Abbruch ihres Erkennungsvorgangs durch die Steuereinheit ausgeführt wird, muß das zur Bearbeitung anstehende Dokument mit einer Zurückweisungsmeldung versehen werden.

Im Anschluß an die Verfahrensschritte 2b) und 5) kann jeweils mit der Vergabe eines neuen Bearbeitungsauftrags zur Durchführung eines Erkennungsvorgangs begonnen werden.

## Patentansprüche

1. Verfahren zur automatischen Zeichenerkennung auf Dokumenten, bei dem
- die zu einem vorliegenden Dokument gehörigen Bilddaten (BDAT) von einer Bildeinheit (PU) aufbereitet und an eine von mehreren Erkennungseinheiten (RU1...RUn) zur Bearbeitung eines Erkennungsvorgangs, bestehend aus mehreren Teilprozessen übertragen werden,
- die Erkennungseinheit (z.B. RUn) zur Abwicklung des Bearbeitungsauftrags von einer Steuereinheit (AU) ausgewählt wird, durch die nach Ankunft der aufbereiteten Bilddaten (VIDAT) in der ausgewählten Erkennungseinheit (z.B. RUn) ein Zeitgeber (TIM) ausgelöst wird, der die Bearbeitungsdauer des jeweils in der Erkennungseinheit laufenden Erkennungsvorgangs angibt,
- der Bearbeitungszustand einer Erkennungseinheit (z.B. RUn) durch Statusinformationen (STS2...STS6) festgelegt wird, die den aktuell laufenden Teilprozeß eines Erkennungsvorgangs angeben,
- der Wert des Zeitgebers (TIM) mit einem Erwartungswert (z.B. T2) für die Bearbeitungsdauer des aktuell in der Erkennungseinheit laufenden Teilprozesses verglichen wird, und bei dem
- bei Überschreiten des Erwartungswertes (z.B. T2) von der Steuereinheit (AU) ein Abbruch des Erkennungsvorgangs in der Erkennungseinheit (z.B. RUn) für den Fall ausgelöst wird, daß ein weiteres Dokument zur Bearbeitung ansteht und alle Erkennungseinheiten (RU1...RUn) mit Erkennungsaufgaben beschäftigt sind.

2. Schaltungsanordnung zur automatischen Zeichenerkennung auf Dokumenten, mit
- einer Bildeinheit (PU) zur Speicherung der zu einem vorliegenden Dokument gehörigen Bilddaten (BDAT), parallel angeordneten Erkennungseinheiten (RU1...RUn) zur Durchführung von zeitlich parallel oder überlappt ablaufenden Erkennungsvorgängen, sowie einer zentralen Steuereinheit (AU) zur Steuerung des Datenaustausches zwischen den Einheiten,
- einem ersten Leitungssystem (V-BUS) zur Übertragung der Daten (VIDAT) von der Bildeinheit (PU) zu einer der angeschlossenen Erkennungseinheiten (z.B. RUn), sowie einem zweiten Leitungssystem (S-BUS) zur Kopplung der Steuereinheit (AU) mit allen Erkennungseinheiten (RU1...RUn),
- Speichereinrichtungen (VIREC,ADATR,CLR,RDATR,ASP) zur Aufnahme und Bereitstellung der Daten in der Bildeinheit (PU), zur Übernahme der durch die Leitungssysteme (V-BUS,S-BUS) übertragenen Daten- und Steuersignale (SDAT,SADR und AS,DM,ABT, RQUT, VIBUS) sowie zu deren Bereitstellung in den einzelnen Erkennungseinheiten (RU1...RUn) und in der Steuereinheit (AU),
- Kontrolleinrichtungen (ASC,VC,RSC) zur Auswertung der Steuersignale (AS,DM,ABT,RQUT) für den Datenverkehr zwischen der Steuereinheit (AU) bzw. der Bildeinheit (PU) und einer der Erkennungseinheiten (z.B. RUn),
- Verarbeitungseinrichtungen (CTR-R) in den Erkennungseinheiten zur Durchführung der zu einem Erkennungsvorgang jeweils gehörigen Teilprozesse, sowie mit
- Signalprozessoren (PSPU,ASPU,RSPU) zur Steuerung der in den Einheiten (PU,AU,RU1...RUn) auszuführenden Funktionen, von denen der zur Steuereinheit (AU) gehörige Signalprozessor (ASPU) jeweils einen Zeitgeber (TIM) für die Überwachung der Bearbeitungsdauer des in einer Erkennungseinheit (z.B. RUn) laufenden Erkennungsvorgangs aufweist, durch den bei Überschreiten eines Erwartungswertes (z.B. T2) für die Bearbeitungsdauer des anhand eines Statussignals (z.B. STS2) erkennbaren, aktuell laufenden Teilprozesses eine Unterbrechungsmeldung für den Fall auslösbar ist, daß ein weiteres Dokument zur Bearbeitung ansteht und alle Erkennungseinheiten (RU1... RUn) mit Erkennungsaufgaben beschäftigt sind.

## Claims

1. Method for automatic character recognition on documents, in which
- the image data (BDAT) associated with a respective document are prepared by an image unit (PU) and are transmitted to one of a plurality of recognition units (RU1...RUn) for processing of a recognition process comprising a plurality of partial processes,
- the recognition unit (e.g. RUn) for handling the processing job is selected by a control unit (AU), by means of which a timer (TIM) is triggered after the arrival of the prepared image data (VIDAT) in the selected recognition unit (e.g. RUn), which timer sets the processing time of the respective recognition process running in the recognition unit,
- the processing status of a recognition unit (e.g. RUn) is determined by status information (STS2...STS6) which indicates the currently running partial process of a recognition process,
- the value of the timer (TIM) is compared with an expected value (e.g. T2) for the processing time of the partial process currently running in the recognition unit, and in which
- if the expected value (e.g. T2) is exceeded, the control unit (AU) triggers an abortion of the recognition process in the recognition unit (e.g. RUn) if a further document is awaiting processing and all recognition units (RU1...RUn) are busy with recognition tasks.

2. Circuit arrangement for automatic character recognition on documents, having
- an image unit (PU) for storing the image data (BDAT) associated with a respective document, recognition units (RU1...RUn) arranged in parallel for executing recognition processes running concurrently or overlapping, and also a central control unit (AU) for controlling the data exchange between the units,
- a first line system (V-BUS) for transmitting the data (VIDAT) from the image unit (PU) to one of the connected recognition units (e.g. RUn), and also a second line system (S-BUS) for coupling the control unit (AU) to all recognition units (RU1...RUn),
- memory means (VIREC, ADATR, CLR, RDATR, ASP) for receiving and making the data available in the image unit (PU), for picking up the data signals and control signals (SDAT, SADR and AS, DM, ABT, RQUT, VIBUS) transmitted by the line systems (V-BUS, S-BUS) and making them available in the individual recognition units (RU1...RUn) and in the control unit (AU),
- control devices (ASC, VC, RSC) for evaluating the control signals (AS, DM, ABT, RQUT) for the data traffic between the control unit (AU) or the image unit (PU) and one of the recognition units (e.g. RUn),
- processing means (CTR-R) in the recognition units for executing the partial processes associated in each case with a recognition process, and also having
- signal processors (PSPU, ASPU, RSPU) for controlling the functions to be executed in the units (PU, AU, RU1...RUn), of which the signal processor (ASPU) associated with the control unit (AU) has in each case a timer (TIM) for monitoring the processing time of the recognition process running in a recognition unit (e.g. RUn), by means of which, when an expected value (e.g. T2) for the processing time of the currently running partial process, recognisable by means of a status signal (e.g. STS2), is exceeded, an interrupt message can be triggered if a further document is awaiting processing and all recognition units (RU1...RUn) are busy with recognition tasks.

## Revendications

1. Procédé de reconnaissance automatique de caractères sur des documents, dans lequel
- les données (BDAT) d'image associées à un document présent, sont préparées par une unité (PU) de traitement d'images et sont transmises à une unité de reconnaissance parmi plusieurs unités (RU1..RUn) de reconnaissance destinées à traiter un processus de reconnaissance composé de plusieurs processus partiels,
- l'unité de reconnaissance (par exemple RUn) destinée à éxécuter l'ordre de traitement est sélectionnée par une unité (AU) de commande, au moyen de laquelle, après l'arrivée des données (VIDAT) d'image préparées dans l'unité de reconnaissance sélectionnée (par exemple RUn), est déclenchée une horloge (TIM), qui indique la durée de traitement de reconnaissance se déroulant dans l'unité de reconnaissance,
- l'état de traitement d'une unité de traitement (par exemple RUn) est fixé par des informations (STS2...STS6) d'état, qui indiquent le processus partiel actuellement en cours d'un processus de reconnaissance,
- la valeur (TIM) de l'horloge est comparée à une valeur escomptée (par exemple T2) pour la durée de traitement du processus partiel actuellement en cours dans l'unité de reconnaissance,
et dans lequel
- pour un dépassement de la valeur escomptée (par exemple T2), une interruption du processus de reconnaissance dans l'unité de reconnaissance (par exemple RUn) est déclenchée par l'unité de reconnaissance (par exemple RUn) est déclenchée par l'unité (AU) de commande,dans le cas où un autre document à traiter est en suspens, et où toutes les unités (RU1...RUn) de reconnaissance sont occupées par des tâches de reconnaissance.

2. Montage de reconnaissance automatique de caractères sur des documents, comportant
- une unité (PU) de traitement d'images pour mémoriser les données (BDAT) d'image associées à un document présent, des unités (RU1...RUn) de reconnaissance montées en parallèle et destinées à exécuter des processus de reconnaissance se déroulant en parallèle ou en chevauchement dans le temps, ainsi qu'une unité (AU) centrale de commande pour commander l'échange des données entre les unités,
- un premier système (V-BUS) de lignes pour transmettre les données (VIDAT) de l'unité (PU) de traitement d'images à l'une des unités de reconnaissance raccordées (par exemple RUn) ainsi qu'un second système (S-BUS) de lignes pour connecter l'unité (AU) de commande à toutes les unités (RU1...RUn) de reconnaissance,
- des dispositifs (VIREC, ADATR, CLR, RDATR, ASP) de mémoire pour recevoir et préparer les données dans l'unité (PU) de traitement d'images pour les signaux de données et les signaux de commande (SDAT, SADR et AS, DM, ABT, RQUT, VIBUS), transmis par les systèmes de lignes (V-BUS, S-BUS), ainsi que pour les préparer dans les unités (RU1...RUn) de reconnaissance et dans l'unité (AU) de commande,
- des dispositifs (ASC, VC, RSC) de contrôle destinés à exploiter les signaux (AS, DM, ABT, RQUT) de commande pour la circulation des données entre l'unité (AU) de commande ou l'unité (PU) de traitement d'images et l'une des unités de reconnaissance (par exemple RUn),
- des dispositifs (CTR-R) de traitement situés dans les unités de reconnaissance pour mettre en oeuvre les processus partiels respectivement associés à un processus de reconnaissance, ainsi que
- des processeurs (PSPU, ASPU, RSPU) de signaux pour commander les fonctions, qui doivent être exécutées dans les unités (PU, AU, RU1...RUn), parmi lesquels le processeur (ASPU) de signaux associé à l'unité (AU) de commande comporte respectivement une horloge (TIM) pour le contrôle des durées de traitement du processus de reconnaissance en cours dans une unité de reconnaissance (par exemple RUn), par lequel, lorsque la durée de traitement du processus partiel actuellement en cours, qui peut être identifié par un signal d'état (par exemple STS2), dépasse une valeur escomptée (par exemple T2), un message d'interruption peut être déclenché dans le cas où un autre document à traiter est en suspens et où toutes les unités (RU1...RUn) de reconnaissance sont occupées par des tâches de reconnaissance.
